# EUROPÄISCHE PATENTANMELDUNG

(11) **EP 2 233 769 A2**
(43) Veröffentlichungstag der Anmeldung: **29.09.2010**
(21) Anmeldenummer: 10151750.6
(22) Anmeldetag: 27.01.2010
(51) Int. Cl.: F16F 9/32, F16F 9/46

(54) **Dämpfer**

(30) Priorität: 24.03.2009 DE 102009001810
(71) Anmelder: Robert Bosch GmbH, 70442 Stuttgart (DE)
(72) Erfinder: Kratzer, Dietmar, 71732 Tamm (DE)

(57) **Zusammenfassung**

Die Erfindung betrifft einen Dämpfer (10) mit einem Dämpferzylinder (12), einer Kolbeneinheit (14, 14', 14"), die eine in dem Dämpferzylinder (12) über eine Kolbenstange (16, 16', 16") geführte Kolbenstempeleinheit (18, 18', 18") umfasst, einer innerhalb des Dämpferzylinders (12) angeordneten Durchflusseinrichtung (20', 20") zum Durchfluss eines Dämpferfluidstroms, einer innerhalb der Kolbeneinheit (14, 14', 14") angeordneten Verstelleinheit (22', 22") zur Regelung des Dämpferfluidstroms in der Durchflusseinrichtung (20, 20', 20"), einer Antriebseinrichtung (28', 28") zum Antreiben der Verstelleinheit (22', 22") und einer Elektronikeinheit (32', 32") zur Ansteuerung der Antriebseinrichtung (28', 28"). Erfindungsgemäß sind die Elektronikeinheit (32', 32") und/oder die Antriebseinrichtung (28', 28") mindestens teilweise in der Kolbenstange (16, 16', 16") angeordnet.

## Beschreibung

### Stand der Technik

Die Erfindung geht aus von einem Dämpfer nach der Gattung des unabhängigen Patentanspruchs 1.

In der Offenlegungsschrift DE 10 2007 025 966 A1 wird ein Dämpfer für ein Fahrzeug beschrieben. Der beschriebene Dämpfer umfasst einen mit einem Dämpferfluid befüllten Dämpferzylinder, in welchem eine Kolbenstempeleinheit über eine Kolbenstange geführt ist. Die Kolbenstempeleinheit ist als kompakte Einheit ausgeführt, die als Gehäuse ein Stempelrohr mit einer das Stempelrohr nach unten abschließenden Rohrabschlusseinheit aufweist. Bei einer axialen Bewegung der Kolbenstange und damit der Kolbenstempeleinheit gegenüber dem Dämpferzylinder muss das Dämpferfluid durch eine innerhalb des Dämpferzylinders angeordnete Durchflusseinrichtung fließen. Durch den Widerstand, welcher dem Dämpferfluid hierbei entgegengebracht wird, werden Druckdifferenzen erzeugt, die über Wirkflächen Dämpfungskräfte erzeugen. Damit der Dämpfer in zwei Richtungen Dämpfungsarbeit ausüben kann und somit sowohl beim so genannten Ausfedern als auch beim so genannten Einfedern dämpft, weist die Durchflusseinrichtung eine in eine erste Durchflussrichtung wirkende Druckstufe und eine in eine zweite Durchflussrichtung wirkende Zugstufe auf. Im Stempelrohr der Kolbenstempeleinheit sind eine Verstelleinheit zur Regelung des Dämpferfluidstroms in der Durchflusseinrichtung, eine Antriebseinrichtung zum Antreiben der Verstelleinheit und eine Elektronikeinheit zur Ansteuerung der Antriebseinrichtung angeordnet.

### Offenbarung der Erfindung

Der erfindungsgemäße Dämpfer mit den Merkmalen des unabhängigen Patentanspruchs 1 hat demgegenüber den Vorteil, dass die Elektronikeinheit und/oder die Antriebseinrichtung mindestens teilweise in der Kolbenstange angeordnet sind. In vorteilhafter Weise werden durch die erfindungsgemäße mindestens teilweise Anordnung der Antriebseinrichtung und der Elektronikeinheit in der hohl ausgebildeten Kolbenstange die Bauhöhe der Kolbenstempeleinheit und damit die Bauhöhe des Dämpfers reduziert. Der bisher nur für Zuleitungen genutzte Hohlraum der Kolbenstange wird in vorteilhafter Weise zusätzlich zur Unterbringung von Funktionseinheiten genutzt. Insbesondere kann auf Grund der erfindungsgemäßen mindestens teilweisen Verlagerung der Elektronikeinheit und der Antriebseinrichtung in die Kolbenstange eine Verstellfunktion der Kolbenstempeleinheit realisiert werden ohne Einschränkung des nutzbaren Hubs des Dämpfers. Dies ist insbesondere bei einem Stoßdämpfer mit einer verstellbaren Kolbenstempeleinheit sehr wichtig, da eine große Bauhöhe der Kolbenstempeleinheit zu einer unerwünschten Verringerung des nutzbaren Hubs des Dämpfers führt. In besonders vorteilhafter Weise ist hierdurch die Bauhöhe einer Kolbenstempeleinheit eines verstellbaren, erfindungsgemäßen Dämpfers mit der Bauhöhe einer Kolbenstempeleinheit eines konventionellen Passivdämpfers vergleichbar.

Durch die in den abhängigen Ansprüchen aufgeführten Maßnahmen und Weiterbildungen sind vorteilhafte Verbesserungen des im unabhängigen Patentanspruch 1 angegebenen Dämpfers möglich.

In einer Ausgestaltung weist der erfindungsgemäße Dämpfer eine Verstelleinheit mit einem ersten Verstellmodul zur Regelung des Dämpferfluidstroms in einem ersten Durchflusskanal der Durchflusseinrichtung und mit einem zweiten Verstellmodul zur Regelung des Dämpferfluidstroms in einem zweiten Durchflusskanal der Durchflusseinrichtung auf. In einer weiteren Ausgestaltung weist der erfindungsgemäße Dämpfer eine Antriebseinrichtung mit einer ersten Antriebseinheit zum Antreiben der ersten Verstelleinrichtung und mit einer zweiten Antriebseinheit zum Antreiben der zweiten Verstelleinrichtung auf. In vorteilhafter Weise ist hierdurch eine gezielte Einstellung des Dämpferverhaltens möglich. Insbesondere ermöglicht der erfindungsgemäße Dämpfer eine direkte Steuerung des Dämpferfluidstroms, welche praktisch ohne Verzögerungen und/oder Einschwingzustände erfolgt. Vorzugsweise sind die Verstellmodule derart ausgestaltet, dass zur Verstellung geringe Stellkräfte der Antriebseinheiten ausreichen, so dass beispielsweise Drehmagnete, Schrittmotoren usw. als rotatorische Antriebseinheiten verwendbar sind.

In vorteilhafter Weise sind die Einheiten in Richtung einer Hochachse in einer Stapelbauweise angeordnet. Hierdurch ergibt sich auf konstruktiv einfache Weise eine Reduzierung der Bauhöhe der Kolbenstempeleinheit, wodurch der nutzbare Hub des Dämpfers in vorteilhafter Weise vergrößert wird.

In einer Ausgestaltung des erfindungsgemäßen Dämpfers ist die Reihenfolge der Einheiten innerhalb des Stapels an die Ausführungsform des Dämpfers anpassbar. In vorteilhafter Weise lässt sich hierdurch eine einfache und kostengünstige Variantenbildung umsetzen. Die erfindungsgemäße Ausführung ermöglicht eine vielfältige Ausführung der Kolbenstempeleinheit bei gleichbleibend verringerter Bauhöhe.

In einer Ausgestaltung des erfindungsgemäßen Dämpfers weist ein erster Stapel eine erste Reihenfolge mit der ersten Antriebseinheit, der Verstelleinheit, der zweiten Antriebseinheit, der Kolbenstempeleinheit und der Elektronikeinheit auf. In weiterer Ausgestaltung des erfindungsgemäßen Dämpfers sind die Elektronikeinheit und die zweite Antriebseinheit mindestens teilweise in der Kolbenstange angeordnet. In vorteilhafter Weise werden durch die erfindungsgemäße Ausgestaltung die Bauhöhe der Kolbenstempeleinheit und damit die Bauhöhe des Dämpfers reduziert. Zusätzlich ergibt sich hierdurch eine konstruktiv einfache und bauraumsparende Übertragungsmöglichkeit der Antriebskräfte der Antriebseinheiten auf die Verstelleinheit, da diese zwischen den Antriebseinheiten angeordnet ist. Die für die Übertragung der Antriebskräfte zwischen Antriebseinheiten und Verstelleinheit vorgesehenen Getriebeelemente können hierdurch bauraumsparend ausgeführt sein. Insbesondere ist der Einsatz von handelsüblichen Normteilen möglich.

Im erfindungsgemäßen Dämpfer durchdringt die zweite Antriebseinheit die Kolbenstempeleinheit in Richtung der Hochachse. Ein wesentlicher Vorteil besteht im geringen Platzbedarf der Antriebseinheit und im reduzierten Aufwand für die Zuleitungen sowie der dadurch erreichten Kostenersparnis.

In einer weiteren Ausgestaltung des erfindungsgemäßen Dämpfers weist ein zweiter Stapel eine zweite Reihenfolge der Einheiten mit der Verstelleinheit, der Kolbenstempeleinheit, der ersten Antriebseinheit, der zweiten Antriebseinheit und der Elektronikeinheit auf. In vorteilhafter Weise sind hierdurch nur noch zwei Einheiten innerhalb des Stempelrohres angeordnet, wodurch sich eine erhebliche Reduzierung der Bauhöhe der Kolbenstempeleinheit beziehungsweise des Dämpfers ergibt. Zusätzlich kann hierdurch der Aufwand für die Zuleitungen weiter verringert werden, da die Antriebseinheiten und die Elektronikeinheit bauraumnah innerhalb der Kolbenstange angeordnet sind.

Besonders vorteilhaft ist, dass die zweite Antriebseinheit über eine zweite Antriebswelle und die erste Antriebseinheit über eine in der zweiten Antriebswelle geführten, ersten Antriebswelle auf die Verstelleinheit wirkt, wobei die Antriebswellen die Kolbenstempeleinheit durchdringen. Ein wesentlicher Vorteil besteht im geringen Platzbedarf der Getriebeeinheit bei sicherer Übertragung der Antriebskräfte auf die Verstelleinheit.

Zwei Ausführungsbeispiele der Erfindung sind in den Zeichnungen dargestellt und werden in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2 zeigt einen Schnitt durch eine Kolbeneinheit des erfindungsgemäßen Dämpfers in einem ersten Ausführungsbeispiel.
Figur 3 zeigt einen Schnitt durch eine Kolbeneinheit des erfindungsgemäßen Dämpfers in einem zweiten Ausführungsbeispiel.

### Ausführungsformen der Erfindung

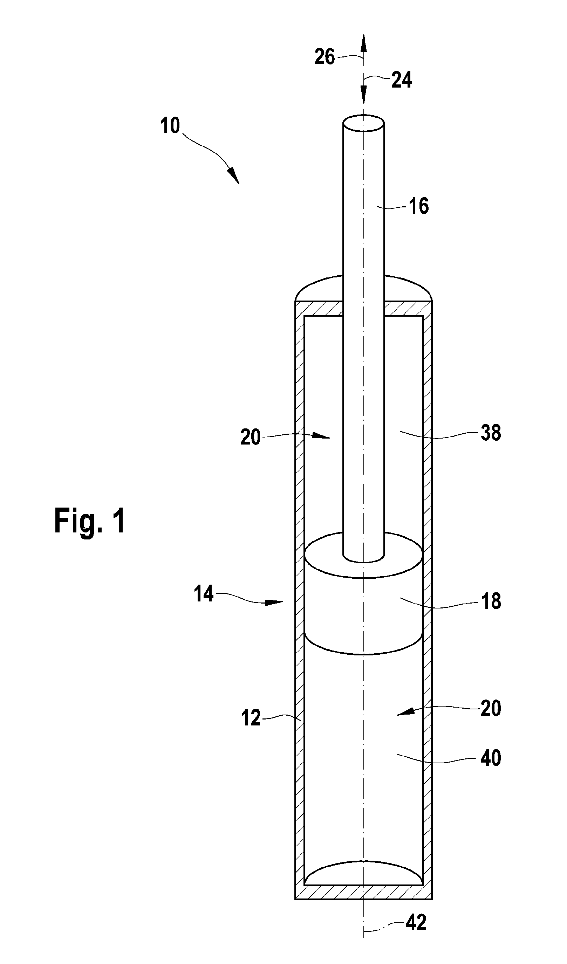

Wie aus Fig. 1 ersichtlich ist, umfasst ein erfindungsgemäßer Dämpfer 10, der vorzugsweise als Stoßdämpfer eines Fahrzeugs ausgeführt ist, einen mit einem Dämpferfluid befüllten Dämpferzylinder 12, in dem eine Kolbeneinheit 14 beweglich angeordnet ist, die eine Kolbenstange 16 und eine Kolbenstempeleinheit 18 umfasst, wobei die Kolbenstempeleinheit 18 über die Kolbenstange 16 in dem Dämpferzylinder 12 geführt wird. Die Kolbenstempeleinheit 18 teilt den Dämpferzylinder 12 in eine obere Dämpferkammer 38 und in eine untere Dämpferkammer 40. Bei einer axialen, vorzugsweise in Richtung einer Hochachse 42 des Dämpfers 10 verlaufenden Bewegung der Kolbenstange 16 und damit der Kolbenstempeleinheit 18 gegenüber dem Dämpferzylinder 12 muss das Dämpferfluid durch eine innerhalb des Dämpferzylinders 12 angeordnete Durchflusseinrichtung 20 fließen. Die Durchflusseinrichtung 20 bildet vorzugsweise einen geschlossenen Kreislauf und weist zwei Durchflusskanäle auf. Im Betrieb beziehungsweise während einer Beanspruchung des Dämpfers 10 strömt durch die in Richtung der Hochachse 42 des Dämpfers 10 bzw. des Dämpferzylinders 12 gerichtete Bewegung der Kolbeneinheit 14 der Dämpferfluidstrom in der Durchflusseinrichtung 20. Die Durchflusseinrichtung 20 umfasst mindestens eine in eine erste Durchflussrichtung 24 wirkende Zugstufe und/oder mindestens eine in eine zweite Durchflussrichtung 26 wirkende Druckstufe.

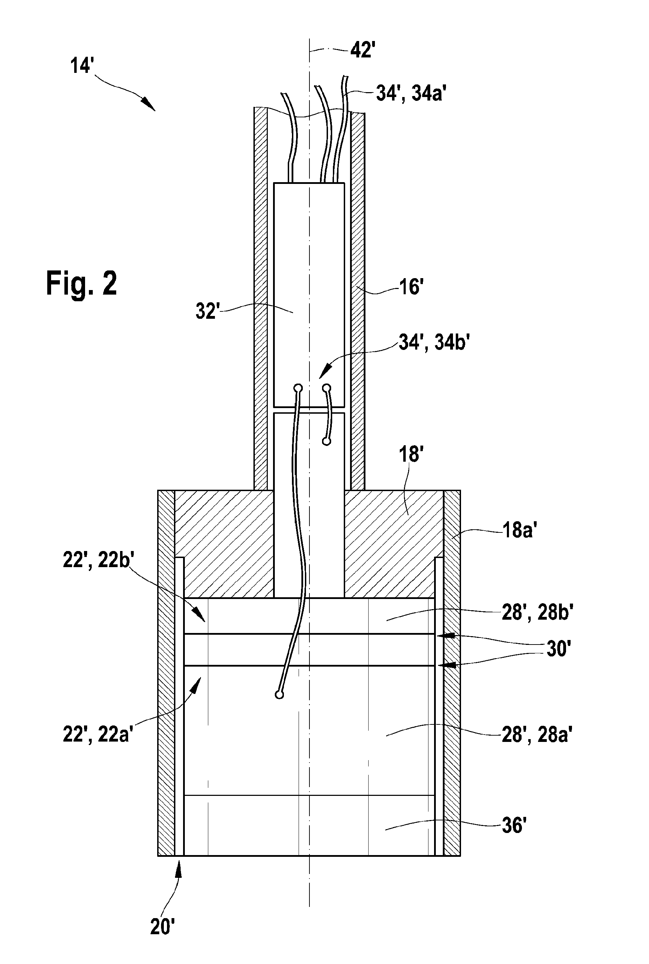

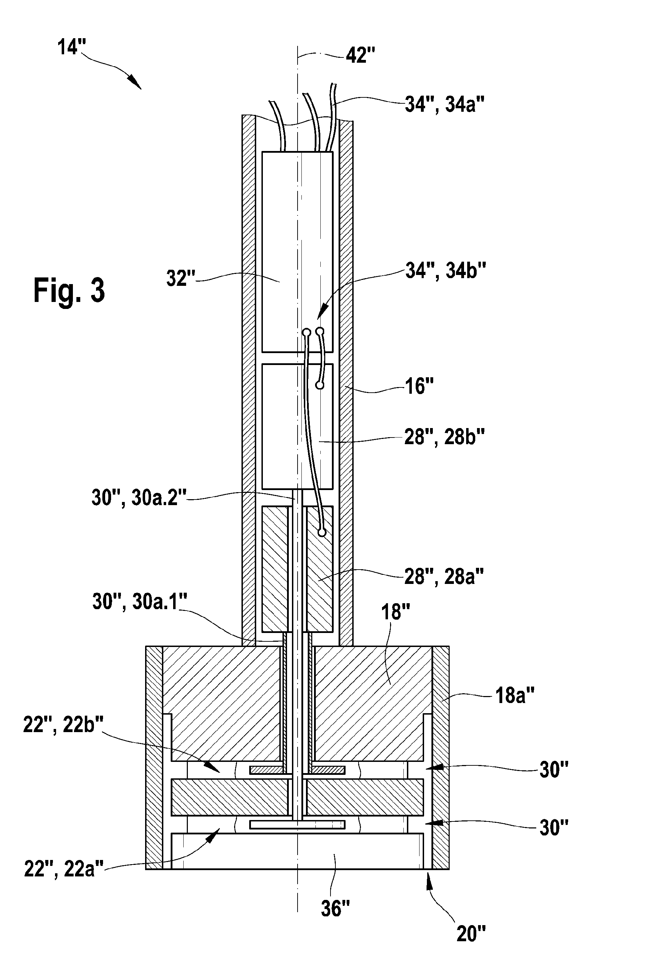

Wie aus den Figuren 2 und 3 ersichtlich, ist die Kolbenstempeleinheit 18', 18" der Kolbeneinheit 14', 14" als kompakte Einheit ausgeführt, die als Gehäuse ein Stempelrohr 18a', 18a" mit einer das Stempelrohr 18a', 18a" nach unten abschließenden Rohrabschlusseinheit 36', 36" aufweist, wobei das Stempelrohr 18a', 18a" beispielsweise als dünnwandiges Stahlrohr ausgeführt ist. Die Kolbeneinheit 14', 14" weist eine Verstelleinheit 22', 22" zur Regelung des Dämpferfluidstroms in der Durchflusseinrichtung 20' und 20", eine Antriebseinrichtung 28', 28" zum Antreiben der Verstelleinheit 22', 22" und eine Elektronikeinheit 32', 32" zur Ansteuerung der Antriebseinrichtung 28', 28" auf.

Die Elektronikeinheit 32', 32" umfasst hier nicht dargestellte Sensoreinheiten und Zuleitungen 34', 34a', 34b', 34", 34a", 34b". Die Sensoreinheiten können beispielsweise als Drucksensoren, Beschleunigungssensoren und/oder Wegesensoren ausgeführt werden, die jeweils eine zugehörige Elektronikschaltung umfassen. Zudem wertet eine nicht dargestellte Auswerte- und Steuereinheit die Signale der Sensoreinheiten aus und stellt die Verstelleinheit 22', 22" über die korrespondierende Antriebseinrichtung 28', 28" in Abhängigkeit von der Auswertung der Sensorsignale entsprechend ein. Die nicht dargestellte Auswerte- und Steuereinheit kann ebenfalls innerhalb der Kolbenstempeleinheit 18', 18" angeordnet werden und beispielsweise als Teil der Elektronikeinheit 32', 32" ausgeführt werden. Alternativ kann die Auswerte- und Steuereinheit außerhalb des Dämpfers 10 in einem Steuergerät angeordnet werden. Die elektrische Versorgung für die Elektronikeinheit 32', 32" und die Antriebseinrichtung 28', 28" bzw. die Signalübertragung für die Sensoreinheiten bzw. für die nicht dargestellte Steuer- und Auswerteeinheit erfolgt über die Zuleitungen 34', 34a', 34b', 34", 34a" und 34b", die durch die Kolbenstange 16', 16" und bei Bedarf bis zur Kolbenstempeleinheit 18' geführt werden.

Die Verstelleinheit 22', 22" umfasst ein erstes Verstellmodul 22a', 22a" zur Regelung des Dämpferfluidstroms in einem ersten Durchflusskanal und ein zweites Verstellmodul 22b', 22b" zur Regelung des Dämpferfluidstroms in einem zweiten Durchflusskanal. Die Antriebseinrichtung 28', 28" umfasst eine erste Antriebseinheit 28a', 28a" zum Antreiben der ersten Verstelleinrichtung 22a', 22a" und eine zweite Antriebseinheit 28b', 28b" zum Antreiben der zweiten Verstelleinrichtung 22b'und 22b", wobei die Antriebseinheiten 28a', 28a", 28b', 28b" beispielsweise jeweils als Drehmagnet ausgeführt sind. Üblicherweise weist eine Verstelleinrichtung 22a', 22a", 22b', 22b" eine Federpaketeinheit und eine über der Federpaketeinheit angeordnete, verschiebbare Schiebereinheit auf, welche über eine Getriebeeinheit 30', 30" von der Antriebseinheit 28a', 28a", 28b', 28b" beaufschlagbar ist. In der Regel umfasst die Getriebeeinheit 30', 30" ein mit der Schiebereinheit in Wirkverbindung stehendes Zahnstangensegment, in das ein Zahnradsegment eingreift, welches zur Positionsveränderung der Schiebereinheit von der korrespondierenden Antriebseinheit 28a', 28a", 28b', 28b" bewegt wird. Die Getriebeeinheit 30', 30" wandelt daher eine Rotationsbewegung der Antriebseinheit 28a', 28a", 28b', 28b" in eine Translationsbewegung der Schiebereinheit in Richtung einer Längsachse um, indem die Antriebseinheit 28a', 28a", 28b', 28b" das Zahnradsegment mit einer Rotationsbewegung beaufschlagt, welches in das Zahnstangensegment eingreift und dieses in eine Translationsbewegung versetzt. D.h. zum Verschieben weist die Schiebereinheit das Zahnstangensegment auf, in welches das Zahnradsegment eingreift, das zur Positionsveränderung der Schiebereinheit von der korrespondierenden Antriebseinheit 28a', 28a", 28b', 28b" gedreht wird. Üblicherweise ist das Zahnstangensegment einstückig mit der Schiebereinheit ausgeführt. Zur Einstellung des Dämpferfluidstroms in der Durchflusseinrichtung 20', 20" wird die Verstelleinrichtung 22a', 22a", 22b', 22b" aktiviert, indem die Schiebereinheit der Verstelleinrichtung 22a', 22a", 22b', 22b" verschoben wird.

Um die Bauhöhe eines Dämpfers zu reduzieren, sind gemäß Figuren 2 und 3 erfindungsgemäß die Elektronikeinheit 32', 32" und/oder die Antriebseinrichtung 28', 28" mindestens teilweise in der Kolbenstange 16', 16" angeordnet. In vorteilhafter Weise sind die Einheiten 18, 18', 18", 22', 22", 28a', 28a", 28b', 28b", 32', 32" in Richtung einer Hochachse 42, 42', 42" in einer Stapelbauweise angeordnet. In besonders vorteilhafter Weise ist die Reihenfolge der Einheiten 18, 18', 18", 22', 22", 28a', 28a", 28b', 28b", 32', 32" innerhalb des Stapels an die Ausführungsform des Dämpfers 10 anpassbar.

Fig. 2 zeigt eine Kolbeneinheit 14' des erfindungsgemäßen Dämpfers 10 in einem ersten Ausführungsbeispiel. Hierbei ist die Reihenfolge der Einheiten 18', 22', 28a', 28b', 32' innerhalb eines ersten Stapels an die Ausführungsform des Dämpfers 10 angepasst. Gemäß dem ersten Ausführungsbeispiel umfasst der erste Stapel die erste Antriebseinheit 28a', die Verstelleinheit 22', die zweite Antriebseinheit 28b', die Kolbenstempeleinheit 18' und die Elektronikeinheit 32' in dieser Reihenfolge. Somit sind die Verstellmodule 22a', 22b' der Verstelleinheit 22' zwischen den Antriebseinheiten 28a' und 28b'angeordnet und können über die Zahnstangensegmente und Zahnradsegmente umfassenden Getriebeeinheiten 30' direkt von den Antriebseinheiten 28a', 28b' beaufschlagt werden. Gemäß dem ersten Ausführungsbeispiel sind die Elektronikeinheit 32' vollständig und die zweite Antriebseinheit 28b' teilweise in der Kolbenstange 16' angeordnet. Hierfür durchdringt die zweite Antriebseinheit 28b' die Kolbenstempeleinheit 18' in Richtung der Hochachse 42'.

Fig. 3 zeigt eine Kolbeneinheit 14" des erfindungsgemäßen Dämpfers 10 in einem zweiten Ausführungsbeispiel. Auch hierbei ist die Reihenfolge der Einheiten 18", 22", 28a", 28b", 32" innerhalb eines zweiten Stapels an die Ausführungsform des Dämpfers 10 angepasst. Gemäß dem zweiten Ausführungsbeispiel umfasst der zweite Stapel die Verstelleinheit 22", die Kolbenstempeleinheit 18", die erste Antriebseinheit 28a", die zweite Antriebseinheit 28b" und die Elektronikeinheit 32" in dieser Reihenfolge. Somit sind die Verstellmodule 22a", 22b" der Verstelleinheit 22" zwischen der Rohrabschlusseinheit 36" und der Kolbenstempeleinheit 18" angeordnet. Die Verstellmodule 22a", 22b" der Verstelleinheit 22" sind über die Zahnstangensegmente und Zahnradsegmente umfassenden Getriebeeinheiten 30" von den Antriebseinheiten 28a", 28b" beaufschlagbar, wobei die Zahnradsegmente auf Grund der Anordnung der Verstellmodule 22a", 22b" der Verstelleinheit 22" über eine erste Antriebswelle 30a.1" und eine zweite Antriebswelle 30a.2" mit den Antriebseinheiten 28a", 28b" in Wirkverbindung stehen. Hierbei wirkt die erste Antriebseinheit 28a" über eine erste Antriebswelle 30a.1" und die zweite Antriebseinheit 28b" über eine in der ersten Antriebswelle 30a.1" geführten, zweiten Antriebswelle 30a.2" auf die Verstelleinheit 22", wobei die Antriebswellen 30a.1", 30a.2" die Kolbenstempeleinheit 18" durchdringen. Gemäß dem zweiten Ausführungsbeispiel sind die Elektronikeinheit 32" und die beiden Antriebseinheiten 28a", 28b" vorzugsweise vollständig in der Kolbenstange 16" angeordnet.

## Patentansprüche

1. Dämpfer (10) mit einem Dämpferzylinder (12), einer Kolbeneinheit (14, 14', 14"), die eine in dem Dämpferzylinder (12) über eine Kolbenstange (16, 16', 16") geführte Kolbenstempeleinheit (18, 18', 18") umfasst, einer innerhalb des Dämpferzylinders (12) angeordneten Durchflusseinrichtung (20', 20") zum Durchfluss eines Dämpferfluidstroms, einer innerhalb der Kolbeneinheit (14, 14', 14") angeordneten Verstelleinheit (22', 22") zur Regelung des Dämpferfluidstroms in der Durchflusseinrichtung (20, 20', 20"), einer Antriebseinrichtung (28', 28") zum Antreiben der Verstelleinheit (22', 22") und einer Elektronikeinheit (32', 32") zur Ansteuerung der Antriebseinrichtung (28', 28"), **dadurch gekennzeichnet, dass** die Elektronikeinheit (32', 32") und/oder die Antriebseinrichtung (28', 28") mindestens teilweise in der Kolbenstange (16, 16', 16") angeordnet sind.

2. Dämpfer nach Anspruch 1, **gekennzeichnet durch** eine Verstelleinheit (22', 22") mit einem ersten Verstellmodul (22a', 22a") zur Regelung des Dämpferfluidstroms in einem ersten Durchflusskanal der Durchflusseinrichtung und mit einem zweiten Verstellmodul (22b', 22b") zur Regelung des Dämpferfluidstroms in einem zweiten Durchflusskanal der Durchflusseinrichtung.

3. Dämpfer nach Anspruch 1 oder 2, **gekennzeichnet durch** eine Antriebseinrichtung (28', 28") mit einer ersten Antriebseinheit (28a', 28a") zum Antreiben der ersten Verstelleinrichtung (22a', 22a") und mit einer zweiten Antriebseinheit (28b', 28b") zum Antreiben der zweiten Verstelleinrichtung (22b', 22b").

4. Dämpfer nach einem der Ansprüche 1 bis 3, **dadurch gekennzeichnet, dass** die Einheiten (18, 18', 18", 22', 22", 28a', 28a", 28b', 28b", 32', 32") in Richtung einer Hochachse (42, 42', 42") in einer Stapelbauweise angeordnet sind.

5. Dämpfer nach Anspruch 4, **dadurch gekennzeichnet, dass** die Reihenfolge der Einheiten (18, 18', 18", 22', 22", 28a', 28a", 28b', 28b", 32', 32") innerhalb des Stapels an die Ausführungsform des Dämpfers (10) anpassbar ist.

6. Dämpfer nach Anspruch 4 oder 5, **dadurch gekennzeichnet, dass** ein erster Stapel eine erste Reihenfolge mit der ersten Antriebseinheit (28a'), der Verstelleinheit (22'), der zweiten Antriebseinheit (28b'), der Kolbenstempeleinheit (18') und der Elektronikeinheit (32') aufweist.

7. Dämpfer nach einem der Ansprüche 4 bis 6, **dadurch gekennzeichnet, dass** die Elektronikeinheit (32') und die zweite Antriebseinheit (28b') mindestens teilweise in der Kolbenstange (16') angeordnet sind.

8. Dämpfer nach einem der Ansprüche 4 bis 7, **dadurch gekennzeichnet, dass** die zweite Antriebseinheit (28b') die Kolbenstempeleinheit (18') in Richtung der Hochachse (42') durchdringt.

9. Dämpfer nach Anspruch 4 oder 5, **dadurch gekennzeichnet, dass** ein zweiter Stapel eine zweite Reihenfolge mit der Verstelleinheit (22"), der Kolbenstempeleinheit (18"), der ersten Antriebseinheit (28a"), der zweiten Antriebseinheit (28b") und der Elektronikeinheit (32") aufweist.

10. Dämpfer nach einem der Ansprüche 4, 5 oder 9, **dadurch gekennzeichnet, dass** die erste Antriebseinheit (28a") über eine erste Antriebswelle (30a.1") und die zweite Antriebseinheit (28b") über eine in der ersten Antriebswelle (30a.1") geführten, zweiten Antriebswelle (30a.2") auf die Verstelleinheit (22") wirkt, wobei die Antriebswellen (30a.1", 30a.2") die Kolbenstempeleinheit (18") durchdringen.
